# EUROPÄISCHE PATENTSCHRIFT

(11) **EP 0 812 644 B1**
(45) Veröffentlichungstag und Bekanntmachung des Hinweises auf die Patenterteilung: **17.10.2001**
(21) Anmeldenummer: 97106241.9
(22) Anmeldetag: 16.04.1997
(51) Int. Cl.: B23K 1/08

(54) **Vorrichtung Lötschablone und Verfahren zum Löten von Temperaturwächtern**
Device, soldering template and method for soldering temperature controllers
Dispositif, gabarit de soudage et méthode pour le soudage d'un thermocontrôleur

(30) Priorität: 12.06.1996 DE 19623421
(43) Veröffentlichungstag der Anmeldung: 17.12.1997
(73) Patentinhaber: Erbengemeinschaft Peter Hofsäss: Hofsäss, U. Hofsäss, M.P. Hofsäss, D.P. Hofsäss, H.P. Hofsäss, C.R. Hofsäss, B.M., 75181 Pforzheim (DE)
(72) Erfinder: Hofsäss, Peter, verstorben (DE)
(74) Vertreter: Otten, Hajo, Dr.-Ing.

(56) Entgegenhaltungen:
- DE-A- 3 910 484
- US-A- 2 737 917
- US-A- 3 767 102
- US-A- 5 148 961
- THOMAS STEARNS: ""FOUNTAIN" SOLDERING-ITS BACKGROUND AND DEVELOPMENT" IRE TRANSACTIONS ON PRODUCT ENGINEERING AND PRODUCTION., Bd. 3, Nr. 4, April 1958, NEW YORK US, Seiten 31-34, XP002040781

## Beschreibung

Die vorliegende Erfindung betrifft eine Lötschablone, eine Vorrichtung sowie ein Verfahren zum Anlöten von Anschlußdrähten an ein Gehäuse eines Temperaturwächters.

Eine gattungsgemäße Lötschablone für Anschußdrähte ist aus der US-A-4 654 967 bekannt.

Temperaturwächter werden immer häufiger überall dort eingesetzt, wo elektrische Geräte oder Bauteile vor Überhitzung oder zu hohem Strom geschützt werden müssen. Die Temperaturwächter werden dazu in der Regel mit Anschlußdrähten oder -litzen versehen angeliefert und dann mit den Geräten/Bauteilen entsprechend verbunden.

Besonders zeitaufwendig ist bei derartigen Temperaturwächtern die Anschlußtechnik, also das Verbinden der Anschlußdrähte bzw. -litzen mit den Temperaturwächtern. Viele derartige Temperaturwächter weisen ein zweiteiliges Metallgehäuse auf, in dem z.B. ein Bimetall-Schaltwerk von üblicher Konstruktion angeordnet ist. Das metallische Gehäuseunterteil wird von einem Deckelteil verschlossen, das gegenüber dem Gehäuseunterteil durch eine Isolierscheibe elektrisch isoliert ist. Das Deckelteil liegt dabei auf einer innen in dem Gehäuseunterteil umlaufenden Schulter auf und ist durch einen Bördelrand des Gehäuseunterteils an diesem befestigt.

Die Anschlußdrähte werden an ein derartiges Gehäuse angelötet, wobei ein Anschlußdraht an den Bördelrand sowie ein weiterer Anschlußdraht an das Deckelteil angelötet werden. Es ist aber auch bekannt, statt eines metallischen Deckelteils einen elektrisch nichtleitenden Deckel zu verwenden, auf dem dann mittig ein Anschlußkontakt vorgesehen ist, der sich in das Innere des Gehäuses des Temperaturwächters erstreckt, wie dies an sich bekannt ist.

Das Anlöten der Anschlußdrähte an den Bördelrand sowie an das Deckelteil bzw. den darauf vorgesehenen Anschlußkontakt erfolgt in Lohnarbeit von Hand und stellt einen großen Kostenblock bei der Konfektionierung der bekannten Temperaturwächter dar.

Die Gehäuse der Temperaturwächter weisen Durchmesser im Bereich von 10 mm sowie Dicken im Bereich von wenigen Millimetern auf, so daß sie von automatischen Lötstationen nicht gehandhabt werden können. Eine weitere Schwierigkeit besteht darin, daß die Abmaße der Anschlußdrähte oder -litzen verglichen mit denen der Gehäuse der Temperaturwächter sehr groß sind, so daß eine genaue Positionierung zwischen den Anschlußdrähten und den Gehäusen beim Löten erforderlich ist. Aus diesen Gründen wurde bisher davon abgesehen, die bekannten Temperaturwächter automatisch zu verlöten.

Mit der von Hand durchgeführten Verlötung sind jedoch eine ganze Reihe von Nachteilen verbunden, zu denen neben den hohen Kosten auch die relativ hohe Ausschußrate zählt, die bei von angelerntem Personal durchgeführten Arbeiten üblich ist.

Die DE 39 10 484 A1 beschreibt eine Lötvorrichtung, durch die die einzelnen Bestandteile eines Kondensators miteinander verlötet werden können. Die einzelnen Bestandteile werden zunächst zu dem Kondensator zusammengebaut, bevor dieser dann von oben in ein Lötbad eingetaucht wird, um das Verlöten zu bewirken. Die unteren freien Enden der Anschlußfahnen des Kondensators werden beim Eintauchen in das Lötbad dabei durch eine Kappe geschützt.

Die US-A-4 341 013 beschreibt eine Lötvorrichtung, wobei die Anschlußdrähte in einer Schablone positionniert werden, und ein elektronisches Bauelement zwischen den Anschlußdrähten gehalten und Verlötet wird.

Vor diesem Hintergrund ist es Aufgabe der vorliegenden Erfindung, ein Verfahren sowie eine Vorrichtung von der eingangs genannten Art zu schaffen, um auf konstruktiv einfache und kostengünstige Weise Anschlußdrähte an ein Gehäuse eines Temperaturwächters mit großer Taktrate, also geringer Taktzeit anlöten zu können.

Diese Aufgabe wird erfindungsgemäß durch eine Lötschablone nach Anspruch 1, eine Vorrichtung nach Anspruch 2 und ein Verfahren nach Anspruch 17 gelöst.

Die der Erfindung zugrunde liegende Aufgabe wird auf diese Weise vollkommen gelöst.

Der Erfinder der vorliegenden Anmeldung hat nämlich erkannt, daß es durch die Kombination von Lötschablone und Lotwelle möglich ist, die Anschlußdrähte automatisch an das Gehäuse anzulöten. Die Lötschablone sorgt dabei für eine entsprechende Positionierung zwischen den Anschlußdrähten und dem Gehäuse und ist dabei ferner so ausgelegt, daß ihr von unten eine Lotwelle zugeführt werden kann, die in noch zu beschreibender Weise für das Anlöten der Anschlußdrähte an das Gehäuse sorgt.

Die neue Lötschablone kann jetzt individuell in voll- oder halbautomatischen Vorrichtungen zusammen mit dem neuen Verfahren verwendet werden. Da die Lötschablone das Ausrichten zwischen den Anschlußdrähten und dem Gehäuse erleichtert bzw. die Ausrichtung genau festlegt, führt sie auch schon bei halbautomatischen, also teilweise noch von Hand betätigten Lötanlagen zu einer deutlichen Verringerung des Ausschusses einerseits und einer Erhöhung der Taktrate andererseits. Die Taktrate wird aber nicht nur wegen der vereinfachten Ausrichtung, sondern auch dadurch erhöht, daß das Anlöten durch die von unten der Lötschablone zugeführte Lotwelle erfolgt.

Bei der neuen Vorrichtung ist es dann bevorzugt, wenn eine Heizvorrichtung vorgesehen ist, um das Gehäuse vor dem Kontakt mit der Lotwelle vorzuheizen, wobei die Heizvorrichtung vorzugsweise einen Vorheizstempel umfaßt, der mit dem Gehäuse an dessen von der Lötseite abgelegenen Boden in Anlage gelangt.

Bei dieser Maßnahme ist von Vorteil, daß der Lötvorgang selbst auf denkbar einfache Weise beschleunigt wird, da das Gehäuse bereits auf eine entsprechende Temperatur aufgeheizt ist, wenn die Lotwelle von unten mit dem Gehäuse in Kontakt gelangt. Auch durch diese Maßnahme wird also die erzielbare Taktzeit deutlich erhöht. Besonders einfach gestaltet sich das Vorheizen des Gehäuses durch den Vorheizstempel, der großflächig auf den Boden des Gehäuses drückt und somit für eine gute Wärmeabgabe an das Gehäuse sorgt. Auch hierdurch wird also die Taktzeit noch einmal reduziert, da sich nämlich die zum Vorheizen erforderliche Zeit weiter verringert.

Allgemein ist es bevorzugt, wenn die Betätigungseinrichtung einen Stempel umfaßt, der die Lötschablone nach unten auf die Lotwelle drückt, wobei der Stempel vorzugsweise gleichzeitig der Heizstempel ist.

Hier ist von Vorteil, daß die neue Vorrichtung nunmehr weitgehend automatisch arbeiten kann, nach dem Einlegen der Anschlußdrähte in die Lötschablone und dem Auflegen des Gehäuses auf die dadurch nach unten gedrückten abisolierten Enden der Anschlußdrähte wird der Vorheizstempel automatisch zugestellt, bis er mit dem Boden des Gehäuses in Anlage ist. Dann drückt der Vorheizstempel über das Gehäuse die Lötschablone nach unten auf die Lotwelle, während er gleichzeitig das Gehäuse aufheizt. Diese Maßnahme weist also neben der Erhöhung der Taktrate den weiteren Vorteil auf, daß der gesamte automatische Lötvorgang auf konstruktiv sehr einfache Weise realisiert wird.

Ferner ist es bevorzugt, wenn das Lötgerät eine Schutzgasatmosphäre für die Lotwelle erzeugt, wobei die Schutzgasatmosphäre vorzugsweise mit Ameisensäure angereichert ist.

Durch die Schutzgasatmosphäre und insbesondere deren Anreicherung mit Ameisensäure wird für eine gute Qualität der Lötverbindung gesorgt, so daß durch diese konstruktiv sehr einfachen Maßnahmen für eine Verringerung des Ausschusses gesorgt werden kann.

Dabei ist es bevorzugt, wenn ein Halter für die Lötschablone vorgesehen ist, der die mit Anschlußdrähten und Gehäuse bestückte Lötschablone im Lötbereich oberhalb der Lotwelle hält und vorzugsweise schwenkbar gelagert ist, so daß die Lötschablone nach unten auf die Lotwelle drückbar ist.

Diese Maßnahme ist konstruktiv von Vorteil, ein schwenkbar gelagerter Halter oberhalb der Lotwelle und vorzugsweise unterhalb des Vorheizstempels ermöglicht mit geringem Aufwand die automatische Durchführung des Lötprozesses. Weiter ist von Vorteil, daß dieser Halter außerhalb des Lötbereiches mit den Anschlußdrähten sowie dem Gehäuse bestückt und erst danach in den Lötbereich gefahren werden kann. Der Halter ermöglicht also insgesamt ein vollautomatisches Anlöten der Anschlußdrähte an das Gehäuse.

Dabei ist es dann weiter bevorzugt, wenn eine Handhabungseinrichtung vorgesehen ist, die die Anschlußdrähte in die Lötschablone und das Gehäuse in die Lötschablone auf die Anschlußdrähte einlegt.

Diese Maßnahme ist konstruktiv von Vorteil, sie ermöglicht eine vollständige Automatisierung des Anlötens der Anschlußdrähte an das Gehäuse.

Bei der neuen Lötschablone ist es weiter bevorzugt, wenn sie ein Trägerblech umfaßt, in dem nach oben offene Kanäle zur Aufnahme der Anschlußdrähte vorgesehen sind, wobei auf dem Trägerblech vorzugsweise ein Positionierklotz mit einer seitlich offenen Durchgangsbohrung zur Aufnahme des Gehäuses angeordnet ist, wobei in die Durchgangsbohrung seitlich die Kanäle hineinführen.

Auch diese Maßnahmen sind konstruktiv von Vorteil, sie ermöglichen einen mechanisch sehr einfachen Aufbau der Lötschablone, wobei durch die offenen Kanäle die Anschlußdrähte und durch die Durchgangsbohrung in dem Positionierklotz das Gehäuse sicher positioniert, geführt und gehalten sind.

Ein weiterer Vorteil liegt bei dieser Anordnung darin, daß das Gehäuse von oben auf die abisolierten Enden der Anschlußdrähte aufgelegt wird, so daß es diese nach unten drückt und mit ihnen in unverrückbare Anlage gelangt.

Dabei ist es weiter bevorzugt, wenn das Trägerblech unter der Durchgangsbohrung eine Öffnung aufweist, die die abisolierten Enden der Anschlußdrähte und einen Teil der Lötseite des Gehäuses nach unten freigibt, wobei das Trägerblech vorzugsweise unter der Durchgangsbohrung eine Sicke aufweist, um das Gehäuse geneigt in der Durchgangsbohrung zu positionieren.

Bei diesen Maßnahmen ist von Vorteil, daß durch die Öffnung in dem Trägerblech der Lötbereich definiert wird, während durch die Sicke und die dadurch bedingte, geneigte Lage des Gehäuses verhindert wird, daß Lot auf die Oberseite der Lötschablone gelangt.

Besonders vorteilhaft ist es, wenn die neue Lötschablone im Zusammenhang mit der neuen Vorrichtung verwendet wird.

Durch den oben beschriebenen, mechanischen Aufbau der Lötschablone ist eine automatische Bestückung der Lötschablone mit Anschlußdrähten und Gehäuse möglich, die Positionierung ergibt sich durch die nach oben offenen Kanäle im Zusammenhang mit der seitlich offenen Durchgangsbohrung in dem Positionierklotz. Auf diese Weise können Handhabungsvorrichtungen verwendet werden, die sowohl die Anschlußdrähte als auch die Gehäuse in die Lötschablone einlegen. Hier zeigt sich auch noch ein weiterer Vorteil des Vorheizstempels, der von oben auf den Boden des Gehäuses drückt, um die Lötschablone der Lotwelle zuzuführen. Durch diesen Druck des Vorheizstempels wird nämlich das Gehäuse in der Durchgangsbohrung soweit nach unten gedrückt, bis es die geneigte Lage einnimmt und dabei gleichzeitig die Anschlußdrähte so in die Kanäle drückt, daß die durch die Lötschablone vorgegebene Ausrichtung zwischen Anschlußdrähten und Gehäuse erreicht wird.

In entsprechender Weise ist es bei dem neuen Verfahren bevorzugt, wenn das Gehäuse vor der Beaufschlagung mit der Lotwelle vorgeheizt wird, um das Anlöten zu beschleunigen, und wenn ferner das Beaufschlagen mit der Lotwelle vorzugsweise in einer Schutzgasatmosphäre erfolgt, die vorzugsweise mit Ameisensäure angereichert ist.

Bei diesen Verfahrensschritten ist von Vorteil, daß durch das Vorheizen des Gehäuses eine höhere Taktrate erzielbar ist, während die Schutzgasatmosphäre, die mit Ameisensäure angereichert ist, zu einer Verbesserung der Qualität der Lötverbindung führt.

Weitere Vorteile ergeben sich aus der Beschreibung und der beigefügten Zeichnung.

Es versteht sich, daß die vorstehend genannten und die nachstehend noch zu erläuternden Merkmale nicht nur in den jeweils angegebenen Kombinationen, sondern auch in anderen Kombinationen oder in Alleinstellung verwendbar sind, ohne den Rahmen der vorliegenden Erfindung zu verlassen.

Ein Ausführungsbeispiel der Erfindung ist in der Zeichnung dargestellt und wird in der nachfolgenden Beschreibung näher erläutert. Es zeigen:
- Fig. 1: eine schematische Darstellung der neuen Vorrichtung, vor der Durchführung des Lötvorgangs;
- Fig. 2: die Vorrichtung aus Fig. 1 während des Lötvorgangs;
- Fig. 3: die bei der Vorrichtung aus den Figuren 1 und 2 eingesetzte Lötschablone in einer Vorderansicht;
- Fig. 4: eine Draufsicht auf die Lötschablone aus Fig. 3;
- Fig. 5: eine geschnittene Seitenansicht der Lötschablone aus Fig. 3; und
- Fig. 6: eine Ansicht eines mit Anschlußdrähten versehenen Temperaturwächters von seiner Lötseite her.

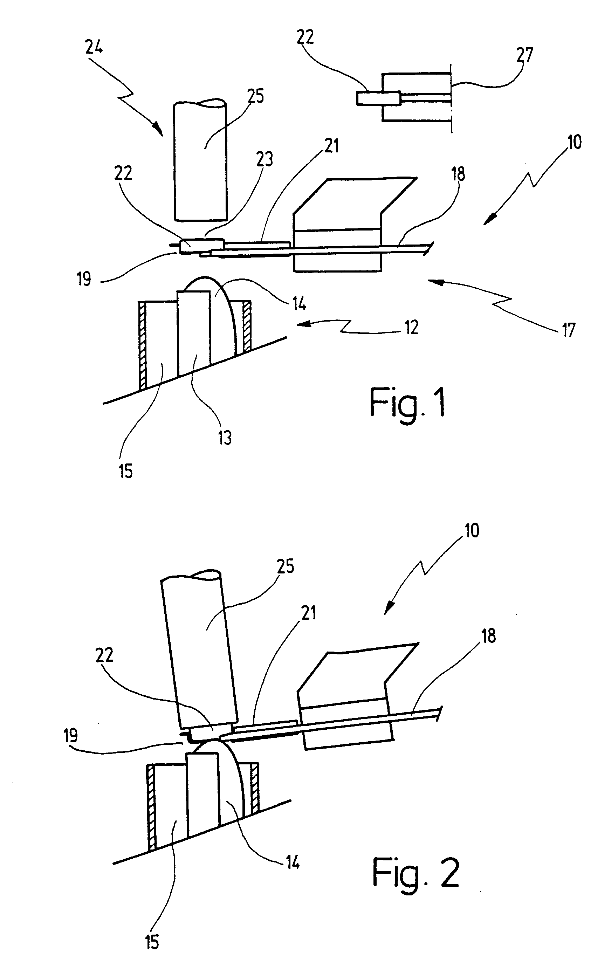

In Fig. 1 ist mit 10 eine Vorrichtung zum vollautomatischen Anlöten von Anschlußdrähten an ein Gehäuse eines Temperaturwächters gezeigt.

Die Vorrichtung 10 umfaßt zunächst ein Lötgerät 12, das in Fig. 1 nur schematisch dargestellt ist. Dieses Lötgerät 12 weist ein Steigrohr 13 auf, aus dem eine bei 14 angedeutete Lotwelle hervorsteigt. Das Steigrohr 13 ist von einem Schutzgaskanal 15 umgeben, der eine mit Ameisensäure angereicherte Schutzgasatmosphäre erzeugt, in der die Lotwelle 14 arbeitet.

Oberhalb des Lötgerätes 12 ist eine Betätigungseinrichtung 17 vorgesehen, die einen in Fig. 1 nach unten schwenkbaren Halter 18 umfaßt, der eine Lötschablone 19 hält.

In diese Lötschablone 19 sind Anschlußdrähte 21 eingelegt, auf denen in noch zu beschreibender Weise ein Gehäuse 22 eines Temperaturwächters positioniert ist. Das Gehäuse 22 weist in Fig. 1 mit seinem Boden 23 nach oben auf eine Heizvorrichtung 24 zu, die einen Vorheizstempel 25 umfaßt.

In Fig. 1 oben rechts ist noch eine Handhabungseinrichtung 27 vorgesehen, über die Anschlußdrähte 21 sowie Gehäuse 22 in die Lötschablone 19 automatisch eingelegt werden. Dazu wird der Halter 18 in Fig. 1 nach rechts aus dem Lötbereich zwischen dem Lötgerät 12 und der Heizvorrichtung 24 herausgefahren.

Nachdem die Lötschablone 19 mit Anschlußdrähten 21 sowie einem Gehäuse 22 bestückt wurde, wird der Halter 18 wieder zwischen das Lötgerät 12 und den Vorheizstempel 25 gefahren, der dann in Fig. 1 nach unten auf den Boden 23 des Gehäuses 22 zugestellt wird und schließlich den Halter 18 nach unten verschwenkt, wie dies in Fig. 2 dargestellt ist.

Sobald der Vorheizstempel 25 mit dem Boden 23 in Kontakt gelangt, wird das Gehäuse 22 über die großflächige Auflage zwischen Vorheizstempel 25 und Boden 23 vorgeheizt, so daß es eine Temperatur annimmt, die ein sehr schnelles Anlöten der Anschlußdrähte 21 an das Gehäuse 22 ermöglicht.

Beim weiteren Zustellen des Vorheizstempels 25 drückt dieser schließlich die Lötschablone 19 mit ihrer Unterseite auf die Lotwelle 14, die in noch zu beschreibender Weise durch die Lötschablone 19 hindurch für ein Anlöten der Anschlußdrähte 21 an dem Gehäuse 22 sorgt.

Die Vorrichtung 10 bleibt für eine vorbestimmte Zeit in der in Fig. 2 dargestellten Lötstellung. Nachdem die voreingestellte Zeit abgelaufen ist, wird der Vorheizstempel 25 zurückgezogen, so daß der Halter 18 wieder in seine in Fig. 1 gezeigte Stellung zurückschwenkt.

Die Vorrichtung 10 aus den Figuren 1 und 2 ermöglicht ein vollautomatisches Anbringen der Anschlußdrähte 21 an dem Gehäuse 22. Mit der Vorrichtung 10 kann nämlich ein entsprechendes Verfahren durchgeführt werden, bei dem die Anschlußdrähte 21 mit ihren abisolierten Enden in die Lötschablone 19 und dann das Gehäuse 22 mit seiner Lötseite nach unten in die Lötschablone 19 auf die Anschlußdrähte 21 eingelegt werden.

Danach wird das Gehäuse vorgeheizt, um das Anlöten zu beschleunigen. Schließlich wird die so bestückte Lötschablone 19 von unten mit der Lotwelle 14 beaufschlagt, die in einer mit Ameisensäure angereicherten Schutzgasatmosphäre arbeitet, um die Qualität der Lötverbindung zu verbessern.

Dieses neue Verfahren zum automatischen Anlöten von Anschlußdrähten 21 an ein Gehäuse 22 eines Temperaturwächters kann selbstverständlich auch auf einer anderen Vorrichtung als der in den Figuren 1 und 2 gezeigten durchgeführt werden.

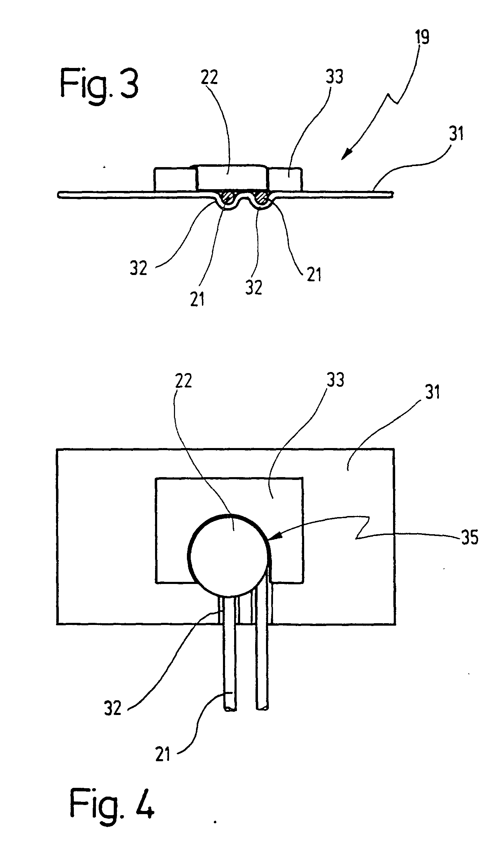

Bei der in den Figuren 1 und 2 gezeigten Vorrichtung 10 sowie bei dem soebenbeschriebenen Verfahren wird vorzugsweise die Lötschablone 19 eingesetzt, die jetzt an Hand der Figuren 3 bis 5 näher beschrieben werden sollen.

Die Lötschablone 19 weist zunächst ein Trägerblech 31 auf, an dem sie von dem Halter 18 ergriffen wird. In dem Trägerblech 31 sind zwei nach oben offene Kanäle 32 vorgesehen, in die von oben die Anschlußdrähte 21 eingelegt werden.

Auf dem Trägerblech 31 ist ein Positionierklotz 33 vorgesehen, der eine zur Seite hin offene Durchgangsbohrung 35 aufweist, die von der Form und den Abmessungen her an das Gehäuse 22 angepaßt ist.

Unter der Durchgangsbohrung 35 ist in dem Trägerblech 31 zunächst eine Öffnung 36 vorgesehen, durch die die abisolierten Enden der Anschlußdrähte 21 sowie ein Teil der Lötseite des Gehäuses 22 von unten für die Lotwelle 14 zugänglich sind. Neben dieser Öffnung 36 ist eine Sicke 37 vorgesehen, die für eine geneigte Ausrichtung des Gehäuses 22 in der Durchgangsbohrung 35 sorgt.

Der insoweit beschriebene Aufbau der Lötschablone 19 ermöglicht ein vollautomatisches Bestücken der Lötschablone 19 mit Anschlußdrähten 21 sowie Gehäuse 22, da die Kanäle 32 sowie die Durchgangsbohrung 35 für eine lagegenaue Ausrichtung zwischen den Anschlußdrähten 21 sowie dem Gehäuse 22 sorgen und ferner das Einführen in die Schablone unterstützen bzw. führen.

Für eine weitere lagegenaue Ausrichtung zwischen den Anschlußdrähten 21 und dem Gehäuse 22 sorgt der von oben in die Durchgangsbohrung 35 eingreifende Vorheizstempel 25, der das Gehäuse 22 nach unten auf die Anschlußdrähte 21 drückt.

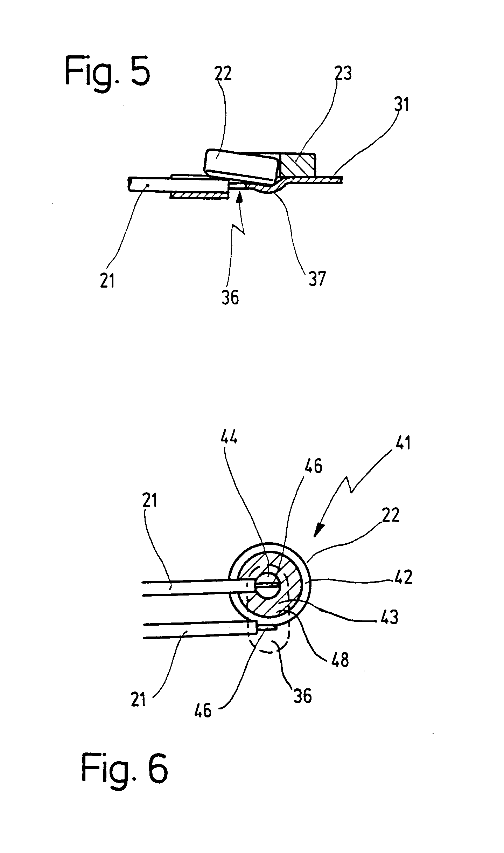

In Fig. 6 ist schließlich noch ein Temperaturwächter 41 von seiner Lötseite her gezeigt. Der Temperaturwächter 41 weist ein zweiteiliges Gehäuse auf, von dessen Unterteil lediglich ein Bördelrand 42 zu erkennen ist, über den das bei 43 angedeutete Deckelteil mit dem Gehäuseunterteil verbunden ist. Etwa zentrisch in dem Deckelteil 43 ist ein Kontaktbereich 44 für einen Anschlußdraht 21 vorgesehen, während der andere Anschlußdraht 21 an den Bördelrand 42 angelötet wird. Gestrichelt ist in Fig. 6 noch die Öffnung 36 in dem Trägerblech 31 der Lötschablone 19 angedeutet, durch die die Lotwelle 14 hindurch in Kontakt mit den bei 46 angedeuteten, abisolierten Enden der Anschlußdrähte 21 sowie dem Gehäuse 22 gelangt.

Die Lotwelle 14 führt nicht zu einem Kurzschluß zwischen den beiden abisolierten Enden 46, da zwischen ihnen auf dem Deckelteil 43 eine durch Schraffur angedeutete Isolierscheibe 48 angeordnet ist, die vorzugsweise aus Nomex besteht und auf der das Lot nicht haftet.

## Patentansprüche

1. Lötschablone zum Anlöten von Anschlußdrähten (21) an ein Gehäuse (22) eines Temperaturwächters (41), die dazu eingerichtet ist, die Anschlußdrähte (21) mit ihren abisolierten Enden (46) und darauf das Gehäuse (22) so aufzunehmen, daß von unten eine Lotwelle (14) zum Anlöten zuführbar ist, wobei die Lötschablone (19) zum Ausrichten zwischen den Anschlußdrähten (21) und dem Gehäuse (22) dient.

2. Vorrichtung zum Anlöten von Anschlußdrähten (21) an ein Gehäuse (22) eines Temperaturwächters (41), mit :
- zumindest einer Lötschablone (19) nach Anspruch 1
- einem Lötgerät (12) zur Erzeugung einer Lotwelle (14), und
- einer Betätigungseinrichtung (17), um die mit Anschlußdrähten (21) und Gehäuse (22) bestückte Lötschablone (19) an ihrer Unterseite mit der Lotwelle (14) in Kontakt zu bringen.

3. Vorrichtung nach Anspruch 2, **dadurch gekennzeichnet, daß** eine Heizvorrichtung (24) vorgesehen ist, um das Gehäuse (22) vor dem Kontakt mit der Lotwelle (14) vorzuheizen.

4. Vorrichtung nach Anspruch 3, **dadurch gekennzeichnet, daß** die Heizvorrichtung (24) einen Vorheizstempel (25) umfaßt, der mit dem Gehäuse (22) an dessen von der Lötseite abgelegenen Boden (23) in Anlage gelangt.

5. Vorrichtung nach einem der Ansprüche 2 bis 4, **dadurch gekennzeichnet, daß** die Betätigungsvorrichtung (17) einen Stempel umfaßt, der die Lötschablone (19) nach unten auf die Lotwelle (14) drückt.

6. Vorrichtung nach den Ansprüchen 4 und 5, **dadurch gekennzeichnet, daß** der Stempel gleichzeitig der Heizstempel (25) ist.

7. Vorrichtung nach einem der Ansprüche 2 bis 6, **dadurch gekennzeichnet, daß** das Lötgerät (12) eine Schutzgasatmosphäre für die Lotwelle (14) erzeugt.

8. Vorrichtung nach Anspruch 7, **dadurch gekennzeichnet, daß** die Schutzgasatmosphäre mit Ameisensäure angereichert ist.

9. Vorrichtung nach einem der Ansprüche 2 bis 8, **dadurch gekennzeichnet, daß** in der Betätigungsvorrichtung (17) ein Halter (18) für die Lötschablone (19) vorgesehen ist, der die mit Anschlußdrähten (21) und Gehäuse (22) bestückte Lötschablone (19) im Lötbereich oberhalb der Lotwelle (14) hält.

10. Vorrichtung nach Anspruch 9, **dadurch gekennzeichnet, daß** der Halter (18) schwenkbar gelagert ist, so daß die Lötschablone (19) nach unten auf die Lotwelle (14) drückbar ist.

11. Vorrichtung nach einem der Ansprüche 2 bis 10, **dadurch gekennzeichnet, daß** eine Handhabungseinrichtung (27) vorgesehen ist, die die Anschlußdrähte (21) in die Lötschablone (19) und das Gehäuse (22) in die Lötschablone (19) auf die Anschlußdrähte (21) einlegt.

12. Lötschablone nach Anspruch 1, **dadurch gekennzeichnet, daß** sie ein Trägerblech (31) umfaßt, in dem nach oben offene Kanäle (32) zur Aufnahme der Anschlußdrähte (21) vorgesehen sind.

13. Lötschablone nach Anspruch 12, **dadurch gekennzeichnet, daß** auf dem Trägerblech (31) ein Positionierklotz (33) mit einer seitlich offenen Durchgangsbohrung (35) zur Aufnahme des Gehäuses (22) angeordnet ist, wobei in die Durchgangsbohrung (35) seitlich die Kanäle (32) hineinführen.

14. Lötschablone nach Anspruch 13, **dadurch gekennzeichnet, daß** das Trägerblech (31) unter der Durchgangsbohrung (35) eine Öffnung (36) aufweist, die die abisolierten Enden (46) der Anschlußdrähte (21) und einen Teil der Lötseite des Gehäuses (22) nach unten freigibt.

15. Lötschablone nach Anspruch 13 oder Anspruch 14, **dadurch gekennzeichnet, daß** das Trägerblech (31) unter der Durchgangsbohrung (35) eine Sicke (37) aufweist, um das Gehäuse (22) geneigt in der Durchgangsbohrung (35) zu positionieren.

16. Vorrichtung nach einem der Ansprüche 2 bis 11, **dadurch gekennzeichnet, daß** die Lötschablone (19) die Lötschablone (19) nach einem der Ansprüche 1 oder 12 bis 15 ist.

17. Verfahren zum Anlöten von Anschlußdrähten (21) an ein Gehäuse (22) eines Temperaturwächters (41), mit den Schritten:
- Einlegen der Anschlußdrähte (21) mit ihren abisolierten Enden (46) in eine Lötschablone (19),
- Einlegen des Gehäuses (22) mit seiner Lötseite nach unten in die Lötschablone (19) auf die Anschlußdrähte (21), und
- Beaufschlagen der so bestückten Schablone (19) mit einer Lotwelle (14).

18. Verfahren nach Anspruch 17, **dadurch gekennzeichnet, daß** das Gehäuse (22) vor der Beaufschlagung mit der Lotwelle (14) vorgeheizt wird, um das Anlöten zu beschleunigen.

19. Verfahren nach Anspruch 17 oder Anspruch 18, **dadurch gekennzeichnet, daß** das Beaufschlagen mit der Lotwelle (14) in einer Schutzgasatmosphäre erfolgt.

20. Verfahren nach Anspruch 19, **dadurch gekennzeichnet, daß** die Schutzgasatmosphäre mit Ameisensäure angereichert wird.

## Claims

1. A soldering template for soldering leads (21) to a housing (22) of a temperature controller (41), wherein the soldering template (19) is arranged for receiving the leads (21) with their stripped ends (46) and, for receiving thereon, the housing (22) in such a way that a soldering wave (14) for soldering can be supplied from below, the soldering template (19) serving to align between the leads (21) and the housing (22).

2. A device for soldering leads (21) to a housing (22) of a temperature controller (41), comprising
- at least one soldering template (19) according to claim 1,
- a soldering apparatus (12) for producing a soldering wave (14), and
- an actuator device (17) for bringing the soldering template (19), which is equipped with the leads (12) and the housing (22), at the underside thereof in contact with the soldering wave (14).

3. The device according to claim 2, **characterised in that** a heating apparatus (24) is provided for preheating the housing (22) prior to the contact with the soldering wave (14).

4. The device according to claim 3, **characterised in that** the heating apparatus (24) comprises a preheating stamp (25) that gets into contact with the housing (22) at its bottom that faces away from the soldering side.

5. The device according to any of the claims 2 to 4, **characterised in that** the actuator device (17) comprises a stamp that presses the soldering template (19) downward onto the soldering wave (14).

6. The device according to claims 4 and 5, **characterised in that** the stamp concurs with the heating stamp (25).

7. The device according to any of the claims 2 to 6, **characterised in that** the soldering apparatus (12) generates a protective gas atmosphere for the soldering wave (14).

8. The device according to claim 7, **characterised in that** the protective gas atmosphere is enriched with formic acid.

9. The device according to any of the claims 2 to 8, **characterised in that** the actuator device (17) comprises a holder (18) for the soldering template (21), wherein the holder (18) supports, in the soldering zone above the soldering wave (14), the soldering template (19) being equipped with the leads (21) and the housing (22).

10. The device according to claim 9, **characterised in that** the holder (18) is pivotably supported such that the soldering template (19) can be pushed downward onto the soldering wave (14).

11. The device according to any of the claims 2 to 10, **characterised in that** a handling facility (27) is provided that inserts the leads (21) into the soldering template (19), and the housing (22) into the soldering template (19) onto the leads (21).

12. The soldering template according to claim 1, **characterised in that** it comprises a supporting metal sheet (31) in which channels (32), which are open to the top, are provided for receiving the leads (21).

13. The soldering template according to claim 12, **characterised in that** a positioning block (33) with a through bore (35) being open to the side is arranged on the supporting metal sheet (31) for receiving the housing (22), wherein the channels (32) lead laterally into the through bore (35).

14. The soldering template according to claim 13, **characterised in that** the supporting metal sheet (31) is, below the through bore (35), provided with an opening (36) that keeps the stripped ends (46) of the leads (21) and a part of the soldering side of the housing (22) accessible from below.

15. The soldering template according to claim 13 or claim 14, **characterised in that** the supporting metal sheet (31) comprises a crimp (37) below the through bore (35) for obliquely positioning the housing (22) in the through bore (35).

16. The device according to any of the claims 2 to 11, **characterised in that** the soldering template (19) is the soldering template (19) according to any of the claims 1 or 12 to 15.

17. Method of soldering leads (21) to a housing (22) of a temperature controller (41), comprising the steps:
- inserting the leads (21) with their stripped ends (46) into a soldering template (19),
- inserting the housing (22) with its soldering side facing downward into the soldering template (19) onto the leads (21), and
- applying a soldering wave (14) to the soldering template (19) equipped like this.

18. The method of claim 17, **characterised in that** the housing (22) is preheated prior to the application of the soldering wave (14) in order to accelerate the soldering.

19. The method of claim 17 or claim 18, **characterised in that** the application of the soldering wave (14) is carried out in a protective gas atmosphere.

20. The method of claim 19, **characterised in that** the protective gas atmosphere is enriched with formic acid.

## Revendications

1. Gabarit de brasage pour braser des fils de connexion (21) sur un boîtier (22) d'un contrôleur de température (41), qui est aménagé pour recevoir les fils de connexion (21) avec leurs extrémités (46) dénudées et, dessus, le boîtier (22), de manière qu'une onde de brasage (14) puisse être amenée à partir du bas, pour le brasage, le gabarit de brasage (19) servant à l'orientation entre les fils de connexion (21) et le boîtier (22).

2. Dispositif pour le brasage de fils de connexion (21) sur un boîtier (22) d'un contrôleur de température (41), comportant :
- au moins un gabarit de brasage (19) selon la revendication 1,
- un appareil de brasage (12) pour produire une onde de brasage (14), et
- un dispositif d'actionnement (17) pour amener le gabarit de brasage (19), équipé des fils de connexion (21) et du boîtier (22), par sa face inférieure, en contact avec l'onde de brasage (14).

3. Dispositif selon la revendication 2, **caractérisé en ce qu'**il est prévu un dispositif de chauffage (24) pour préchauffer le boîtier (22) avant le contact avec l'onde de brasage (14).

4. Dispositif selon la revendication 3, **caractérisé en ce que** le dispositif de chauffage (24) comprend un piston de préchauffage (25) qui vient en contact avec le boîtier (22) par son fond (23), éloigné du côté du brasage.

5. Dispositif selon l'une des revendications 2 à 4, **caractérisé en ce que** le dispositif d'actionnement (17) comprend un piston qui presse le gabarit de brasage (19) vers le bas sur l'onde de brasage (14).

6. Dispositif selon les revendications 4 et 5, **caractérisé en ce que** le piston est en même temps le piston de chauffage (25).

7. Dispositif selon l'une des revendications 2 à 6, **caractérisé en ce que** l'appareil de brasage (12) produit une atmosphère de gaz de protection pour l'onde de brasage (14).

8. Dispositif selon la revendication 7, **caractérisé en ce que** l'atmosphère de gaz de protection est enrichie en acide formique.

9. Dispositif selon l'une des revendications 2 à 8, **caractérisé en ce qu'**il est prévu dans le dispositif d'actionnement (17), pour le gabarit de brasage (19), un support (18) qui maintient le gabarit de brasage (19), équipé des fils de connexion (21, 22), dans la zone de brasage au-dessus de l'onde de brasage (14).

10. Dispositif selon la revendication 9, **caractérisé en ce que** le support (18) est monté de manière à pouvoir pivoter, ce qui fait que le gabarit de brasage (19) peut être pressé vers le bas sur l'onde de brasage (14).

11. Dispositif selon l'une des revendications 2 à 10, **caractérisé en ce qu'**il est prévu un dispositif de manipulation (27) qui place les fils de connexion (21) dans le gabarit de brasage (19) et le boîtier (22) dans le gabarit de brasage (19), sur les fils de connexion (21).

12. Gabarit de brasage selon la revendication 1, **caractérisé en ce qu'**il comprend une tôle de support (31) dans laquelle sont prévus des canaux (32) ouverts vers le haut destinés à recevoir les fils de connexion (21).

13. Gabarit de brasage selon la revendication 12, **caractérisé en ce que** sur la tôle de support (31) est disposé un bloc de positionnement (33) avec un trou débouchant (35), ouvert sur le côté, destiné à recevoir le boîtier (22), des canaux (32) pénétrant latéralement à l'intérieur du trou débouchant (35).

14. Gabarit de brasage selon la revendication 13, **caractérisé en ce que** la tôle de support (31) présente, sous le trou débouchant (35), une ouverture (36) qui dégage vers le bas les extrémités (46) dénudées des fils de connexion (21) et une partie du coté du brasage du boîtier (22).

15. Gabarit de brasage selon la revendication 13 ou la revendication 14, **caractérisé en ce que** la tôle de support (31) présente une moulure (37) sous le trou débouchant (35), afin de positionner le boîtier (22) incliné dans le trou débouchant (35).

16. Dispositif selon l'une des revendications 2 à 11, **caractérisé en ce que** le gabarit de brasage (19) est le gabarit de brasage (19) selon l'une des revendications 1 ou 12 à 15.

17. Procédé de brasage de fils de connexion (21) sur un boîtier (22) d'un contrôleur de température (41), comportant les étapes suivantes :
- mise en place des fils de connexion (21) avec leurs extrémités (46) dénudées dans un gabarit de brasage (19),
- mise en place du boîtier (22), par son côté de brasage vers le bas, dans le gabarit de brasage (19), sur les fils de connexion (21), et
- action d'une onde de brasages (14) sur le gabarit (19) ainsi équipé.

18. Procédé selon la revendication 17, **caractérisé en ce que** le boîtier (22) est préchauffé avant d'être soumis à l'action de l'onde de brasage (14), afin d'accélérer le brasage.

19. Procédé selon la revendication 17 ou la revendication 18, **caractérisé en ce que** l'action de l'onde de brasage (14) se produit dans une atmosphère de gaz de protection.

20. Procédé selon la revendication 19, **caractérisé en ce que** l'atmosphère de gaz de protection est enrichie en acide formique.
